# EUROPÄISCHE PATENTSCHRIFT

(11) **EP 1 859 991 B1**
(45) Veröffentlichungstag und Bekanntmachung des Hinweises auf die Patenterteilung: **10.03.2010**
(21) Anmeldenummer: 07466011.9
(22) Anmeldetag: 07.05.2007
(51) Int. Cl.: B60Q 1/12

(54) **Verfahren zur Schleudererkennung für die Steuerung der Scheinwerfer mit Kurvenlichtfunktion und Schleudererkennungssystem**
Method of skid detection for controlling headlamps with steerable beams and skid recognition system
Procédé destiné à la détermination du dérapage pour la commande du phare doté d'une fonction de lampe incurvée et système de détermination du dérapage

(30) Priorität: 23.05.2006 CZ 20060336
(43) Veröffentlichungstag der Anmeldung: 28.11.2007
(73) Patentinhaber: Skoda Auto a.s., 293 60 Mlada Boleslav (CZ)
(72) Erfinder: Svádová, Martina, 276 01 Mêlnik (CZ); Vanik, Frantisek, 29301 Mladá Boleslav (CZ)

(56) Entgegenhaltungen:
- DE-A1- 10 345 304
- DE-A1- 19 722 457
- DE-A1-102004 016 153
- DE-A1-102004 060 880
- US-A1- 2002 039 296

## Beschreibung

### Bereich der Technik

Die Erfindung betrifft das Verfahren zur Schleudererkennung für die Steuerung der Scheinwerfer mit Kurvenlichtfunktion und das Schleudererkennungssystem.

### Bisheriger Stand der Technik

Moderne Landfahrzeuge, insbesondere Automobile, können heutzutage schon mit vorderen Scheinwerfern mit dynamischer Kurvenbeleuchtung ausgestattet werden, die sich aufgrund der momentanen Geschwindigkeit und dem Lenkradausschlagwinkel in eine optimale Position für eine bessere Fahrbahnbeleuchtung einstellen. Beim Schleudern ist es wünschenswert, dass Scheinwerfer in die Nullposition gerichtet werden, was die horizontale Nullausschwenkung von der Fahrzeugbewegungsachse ist. Der Grund ist die Vermeidung der Scheinwerferausschwenkung in ungewünschter Richtung, bzw. die Schwingung der Scheinwerfer, damit die Aufmerksamkeit des Fahrers auf diese Weise nicht geschwächt wird.
Beim Einsatz des elektronischen Stabilitätsprogramms ESP verfügt dieses System über Sensoren, die die Querbeschleunigung im Fahrzeugschwerpunkt messen. Falls die Querbeschleunigung das festgelegte Limit übersteigt, wird das Motordrehmoment entkoppelt und die Radbremsen werden aktiviert. Diese Sensoren dienen auch als Quelle von Informationen für das Scheinwerferschwenkmodul-Steuergerät, das die Scheinwerfer beim Schleudern in die Nullposition richtet. Der Nachteil ist, dass die meisten Landfahrzeuge, insbesondere Automobile nicht mit ESP ausgestattet sind.
Aus der US-Patentanmeldung US 2002/0039296 A1 ist ein Verfahren zur Schleudererkennung bekannt, bei dem die Geschwindigkeitsdifferenz zwischen dem linken Vorderrad und dem rechten Vorderrad und auch ein Lenkwinkel für die Schleudererkennung benutzt werden.

Der Nachteil dieser Lösung besteht darin, dass, wenn die Geschwindigkeitsdifferenz zwischen dem linken und dem rechten Rad als Eingangssignal benutzt wird, auch ein Drehwinkel des Lenkrads in den Steueralgorithmus eingetragen werden muss.

### Grundlage der Erfindung

Aufgabe der Erfindung ist es daher, ein einfaches und schnelles Verfahren zur Verfügung zu stellen, mit dem auch bei Fahrzeugen ohne ESP ein Schleudern für den Zweck der Scheinwerferausschwenkung erkannt werden kann. Fast die gesamte Produktion von Landfahrzeugen, insbesondere Automobilen, ist mit dem Antiblockiersystem ABS oder zumindest mit dem System ASR ausgestattet, das den Schlupf von Rädern beim Anfahren verhindert. Bestandteil der Systeme ABS und ASR sind insbesondere Geschwindigkeitssensoren an allen Rädern. Diese werden durch die technische Lösung nach der vorliegenden Erfindung genutzt. Ein wesentliches Element der vorliegenden Erfindung betreffend das Verfahren zur Schleudererkennung der Steuerung der Scheinwerfer mit Kurvenlichtfunktion und des Schleudererkennungssystems ist ein Algorithmus, der im Steuergerät der Scheinwerfer mit Kurvenlichtfunktion implementiert ist. Der Algorithmus stellt sicher, dass die Scheinwerfer bei der Schleudererkennung aufgrund der Informationen über Geschwindigkeit einzelner Räder in die Nullposition gestellt werden und während der Schleuderdauer werden sie nicht abhängig von der Fahrzeuggeschwindigkeit und vom Lenkradausschlagwinkel ausgeschwenkt. Zwecks der Scheinwerferausschwenkung ist keine ganz genaue Erkennung der Situation, wo sich das Fahrzeug im Schleudern befindet, erforderlich. Eine grobe Erkennung des Schleuderns aufgrund der Informationen über die Geschwindigkeiten aller 4 Räder ist für diesen Zweck absolut ausreichend. Als Eingangswerte werden die Geschwindigkeitsdifferenzen zwischen beiden Rädern auf eine Fahrzeugseite benutzt, das heißt die Differenz der Geschwindigkeit des linken Vorderrads und des linken Hinterrads bzw. die Differenz des rechten Vorderrads und des rechten Hinterrads.
Der Vorteil dieser Lösung ist der Fakt, dass am Fahrzeug keine kostspielige Ausrüstung mit dem System ESP erforderlich ist, es genügen auch die billigeren Systeme ABS oder ASR.

### Übersicht der Abbildungen in der Zeichnung

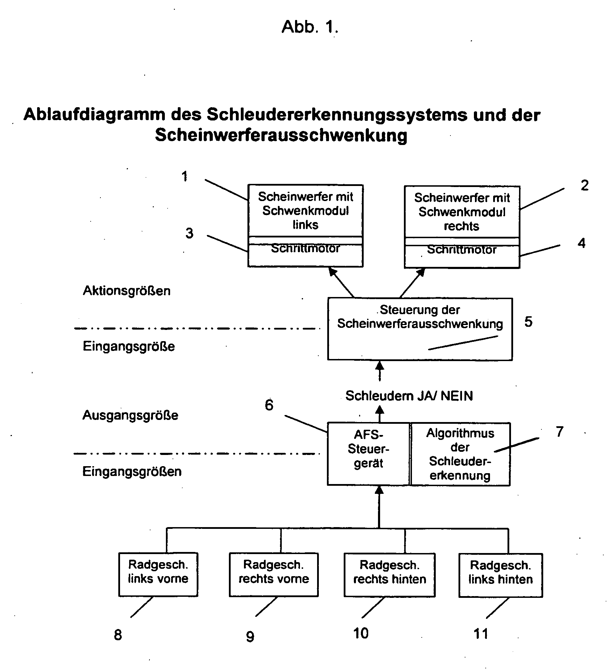

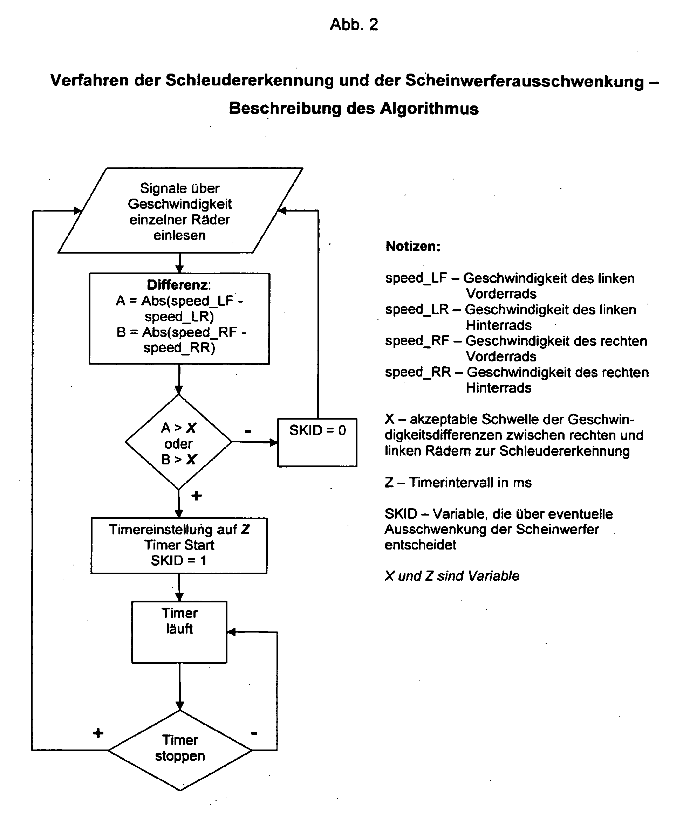

Die Erfindung wird durch schematische Zeichnungen näher erläutert, auf welchen die Abb. 1 das Ablaufdiagramm des Schleudererkennungssystems und die Scheinwerferschwenkung und die Abb. 2 das Verfahren der Schleudererkennung und die Scheinwerferschwenkung mittels des Algorithmus-Ablaufdiagramms darstellen.

### Ausführungsbeispiele der Erfindung

Das Schleudererkennungssystem besteht aus den Geschwindigkeitssensoren einzelner Räder (8, 9, 10, 11), die die Eingangsgrößen für das AFS-Steuergerät (6) sind, welches den Algorithmus (7) enthält, der die Schleudererkennung des Fahrzeugs ermöglicht. Mittels des Scheinwerferschwenksteuerungsmoduls (5) werden diese Scheinwerfer (1, 2) in die optimale Position für eine bessere Beleuchtung in der Kurve eingestellt. Die Scheinwerfereinstellung (1, 2) wird durch Schrittmotoren (3, 4) sichergestellt.

Das Verfahren der Schleudererkennung für die Steuerung der Scheinwerfer (1, 2) von Landfahrzeugen, insbesondere Automobilen, und das Schleudererkennungssystem basiert auf der Auswertung des Vergleichs der Geschwindigkeitsdifferenz zwischen linken (8, 11) und rechten Rädern (9,10).
Falls die Geschwindigkeitsdifferenz des linken Vorderrads (8) und des linken Hinterrads (11) größer als X oder die Differenz des rechten Vorderrads (9) und des rechten Hinterrads (10) größer als X ist, dann SKID = 1 (Fahrzeug im Schleudern, Scheinwerfer werden nicht geschwenkt und werden in waagrechter Position mit Null-Ausschwenkung von der Fahrzeugbewegungsachse gerichtet). Der Timer ist auf den Wert Z (in ms) eingestellt. Die Variable Z bedeutet eine Zeitabweichung, die den Ausschluss der Scheinwerferschwingung ausschließt, falls sich das Ergebnis der Schleudererkennung ändert. Hält der Timer an, wird wieder geprüft, ob sich das Fahrzeug im Schleudern befindet, und falls nicht, ist SKID = 0 (Scheinwerfer beginnen wieder in Abhängigkeit von der Fahrzeuggeschwindigkeit und dem Lenkradausschlagwinkel zu schwenken.

## Patentansprüche

1. Verfahren zur Schleudererkennung für die Steuerung der Scheinwerfer (1, 2), **dadurch gekennzeichnet, dass** es auf der Auswertung des Vergleichs der Geschwindigkeitsdifferenz der linken (8, 11) oder rechten Räder (9,10) basiert.

2. Verfahren nach Anspruch 1, **dadurch gekennzeichnet, dass** falls die Geschwindigkeitsdifferenz der linken Räder (8, 11) größer als X oder die Differenz der rechten Räder (9, 10) größer als X ist, werden Scheinwerfer (1, 2) in waagrechte Position mit Null-Ausschwenkung von der Fahrzeugbewegungsachse gerichtet.

3. Verfahren nach Anspruch 1, **dadurch gekennzeichnet, dass** falls die Geschwindigkeitsdifferenz der linken Räder (8, 11) kleiner als X und gleichzeitig die Differenz der rechten Räder (9, 10) kleiner als X ist, werden Scheinwerfer (1, 2) in eine optimale Position durch Ausschwenkung von der waagrechten Fahrzeugbewegungsachse aufgrund der momentanen Fahrzeuggeschwindigkeit und dem Lenkradeinschlagwinkel eingestellt.

4. Verfahren nach Ansprüchen 1 bis 3, **dadurch gekennzeichnet, dass** der Wert X eine Variable - die akzeptable Schwelle der Geschwindigkeitsdifferenzen zwischen rechten (9, 10) und linken (8, 11) Rädern zur Schleudererkennung ist.

5. Verfahren nach Ansprüchen 1 bis 4, **dadurch gekennzeichnet, dass** die Überprüfung, ob sich das Fahrzeug im Schleudern befindet, nach Ablauf der Variablen Z - Verzögerung (in ms) erfolgt.

6. Schleudererkennungssystem, bestehend aus einem AFS-Steuergerät (6), dessen Eingangsgrößen von Geschwindigkeitssensoren einzelner Räder (8, 9, 10, 11) stammen, welches einen Algorithmus (7) enthält, der die Schleudererkennung des Fahrzeugs ermöglicht, wobei die Scheinwerfer (1, 2) durch das Scheinwerferschwenkmodul (5) in eine optimale Position geschwenkt werden, **dadurch gekennzeichnet, dass** der Algorithmus ein Verfahren nach einem der Ansprüche 1 bis 5 durchführt.

7. Schleudererkennungssystem nach Anspruch 6, **dadurch gekennzeichnet, dass** die Schwenkung der Scheinwerfer (1, 2) durch Schrittmotoren (3, 4) sichergestellt wird.

## Claims

1. Skid detection method for controlling headlights (1, 2), **characterized in that** said method is based on the evaluation of the comparison of the difference in speed between the left-hand wheels (8, 11) or between the right-hand wheels (9, 10).

2. Method according to Claim 1, **characterized in that** if the difference in speed between the left-hand wheels (8, 11) is greater than X or the difference between the right-hand wheels (9, 10) is greater than X, headlights (1, 2) are directed into the horizontal position with zero deflection from the axis of movement of the vehicle.

3. Method according to Claim 1, **characterized in that** if the difference in speed between the left-hand wheels (8, 11) is smaller than X and at the same time the difference between the right-hand wheels (9, 10) is smaller than X, headlights (1, 2) are adjusted into an optimum position by deflection from the horizontal axis of movement of the vehicle on the basis of the current speed of the vehicle and the steering wheel angle.

4. Method according to Claims 1 to 3, **characterized in that** the value X is a variable - the acceptable threshold of the differences in speed between right-hand wheels (9, 10) and left-hand wheels (8, 11) for skid detection.

5. Method according to Claims 1 to 4, **characterized in that** the checking as to whether the vehicle is skidding is carried out after expiry of the variables Z - delay (in ms).

6. Skid detection system composed of an AFS control device (6) whose input variables originate from speed sensors of individual wheels (8, 9, 10, 11), which AFS control device (6) contains an algorithm (7) which permits skid detection of the vehicle, wherein the headlights (1, 2) are pivoted into an optimum position by the headlight-pivoting module (5), **characterized in that** the algorithm carries out a method according to one of Claims 1 to 5.

7. Skid detection system according to Claim 6, **characterized in that** the pivoting of the headlights (1, 2) is ensured by means of stepping motors (3, 4).

## Revendications

1. Procédé de détermination du dérapage pour la commande du phare (1, 2), **caractérisé en ce qu'**il est basé sur l'analyse de la comparaison de la différence de vitesse entre les roues gauches (8, 11) ou droites (9, 10).

2. Procédé selon la revendication 1, **caractérisé en ce que** si la différence de vitesse entre les roues gauches (8, 11) est supérieure à X ou que la différence entre les roues droites (9, 10) est supérieure à X, les phares (1, 2) sont orientés dans une position horizontale avec une déviation nulle par rapport à l'axe de déplacement du véhicule.

3. Procédé selon la revendication 1, **caractérisé en ce que** si la différence de vitesse entre les roues gauches (8, 11) est inférieure à X et qu'en même temps la différence entre les roues droites (9, 10) est inférieure à X, les phares (1, 2) sont ajustés dans une position optimale par déviation par rapport à l'axe horizontal de déplacement du véhicule sur la base de la vitesse instantanée du véhicule et de l'angle de braquage de direction.

4. Procédé selon les revendications 1 à 3, **caractérisé en ce que** la valeur X est une variable, le seuil acceptable des différences de vitesse entre les roues droites (9, 10) et gauches (8, 11) pour la détermination du dérapage.

5. Procédé selon les revendications 1 à 4, **caractérisé en ce que** la vérification que le véhicule est dans un état de dérapage est effectuée après le déroulement de la variable Z - ralentissement (en ms).

6. Système de détermination de dérapage constitué d'un dispositif de commande de suspension active des roues (6) dont les valeurs d'entrée proviennent de capteurs de vitesse des roues individuelles (8, 9, 10, 11), qui contient un algorithme (7) qui permet la détermination du dérapage du véhicule, les phares (1, 2) étant pivotés par le module de pivotement des phares (5) dans une position optimale, **caractérisé en ce que** l'algorithme met en oeuvre un procédé selon l'une quelconque des revendications 1 à 5.

7. Système de détermination de dérapage selon la revendication 6, **caractérisé en ce que** le pivotement des phares (1, 2) est assuré par des moteurs pas à pas (3, 4).
